# EUROPÄISCHE PATENTSCHRIFT

(11) **EP 3 844 051 B1**
(45) Veröffentlichungstag und Bekanntmachung des Hinweises auf die Patenterteilung: **07.06.2023**
(21) Anmeldenummer: 19758417.0
(22) Anmeldetag: 27.08.2019
(51) Int. Cl.: B62D 25/00, B29C 44/18, B62D 29/00, B29L 31/30

(54) **SYSTEM ZU DÄMMUNG EINES STRUKTURELEMENTES**
SYSTEM FOR INSULATION OF A STRUCTURAL ELEMENT
SYSTÈME D'ISOLATION D'UN ÉLÉMENT STRUCTURAL

(30) Priorität: 31.08.2018 EP 18192073
(43) Veröffentlichungstag der Anmeldung: 07.07.2021
(60) Teilanmeldung: 23166716.3
(73) Patentinhaber: Sika Technology AG, 6340 Baar (CH)
(72) Erfinder: GASPARRI, Thomas, 7070 Mignault (BE); BRICHET, Nicolas, 8055 Zürich (CH)
(74) Vertreter: Sika Patent Attorneys
(86) Internationale Anmeldenummer: PCT/EP2019/072884
(87) Internationale Veröffentlichungsnummer: WO 2020/043739

(56) Entgegenhaltungen:
- EP-A1- 1 155 084
- EP-A1- 3 281 970
- EP-B1- 1 155 084
- WO-A1-03/089221
- WO-A1-2008/065049
- WO-A1-2010/060241
- WO-A1-2014/095620
- DE-T2- 60 204 736
- GB-A- 2 463 858
- US-A- 5 266 133
- US-B1- 6 247 287

## Beschreibung

Die Erfindung betrifft ein System zur Dämmung eines Strukturelementes in einem Kraftfahrzeug. Sie betrifft des Weiteren ein Verfahren zur Dämmung eines Strukturelementes in einem Kraftfahrzeug.

Vielfach weisen Bauelemente, wie beispielsweise Karosserien und/oder Rahmen von Transport- und Fortbewegungsmitteln, insbesondere von Fahrzeugen zu Wasser oder zu Land oder von Luftfahrzeugen, Strukturen mit Hohlräumen auf, um leichtgewichtige Konstruktionen zu ermöglichen. Diese Hohlräume verursachen jedoch verschiedenste Probleme. Je nach Art des Hohlraumes muss dieser zum Verhindern des Eindringens von Feuchtigkeit und Verschmutzungen, die zur Korrosion der Bauelemente führen können, abgedichtet werden. Oft ist es auch wünschenswert, die Hohlräume und somit das Bauelement wesentlich zu verstärken, jedoch das geringe Gewicht beizubehalten. Oft ist es auch notwendig, die Hohlräume und somit die Bauelemente zu stabilisieren, um Geräusche, die sonst den Hohlraum entlang oder durch diesen hindurch übertragen werden würden, zu reduzieren. Viele dieser Hohlräume weisen eine unregelmässige Form oder ein enges Ausmass auf, wodurch es erschwert wird, sie richtig abzudichten, zu verstärken und zu dämpfen.

Insbesondere im Automobilbau, aber auch im Flugzeug- und Bootsbau, werden deshalb Abdichtungselemente (Englisch: baffle) verwendet, um Hohlräume abzudichten und/ oder akustisch abzuschotten, oder Verstärkungselemente (Englisch: reinforcer) verwendet, um Hohlräume zu verstärken. Die WO 2008/065049 zeigt ein solches System zur Dämmung eines Strukturelementes im Automobilbau.

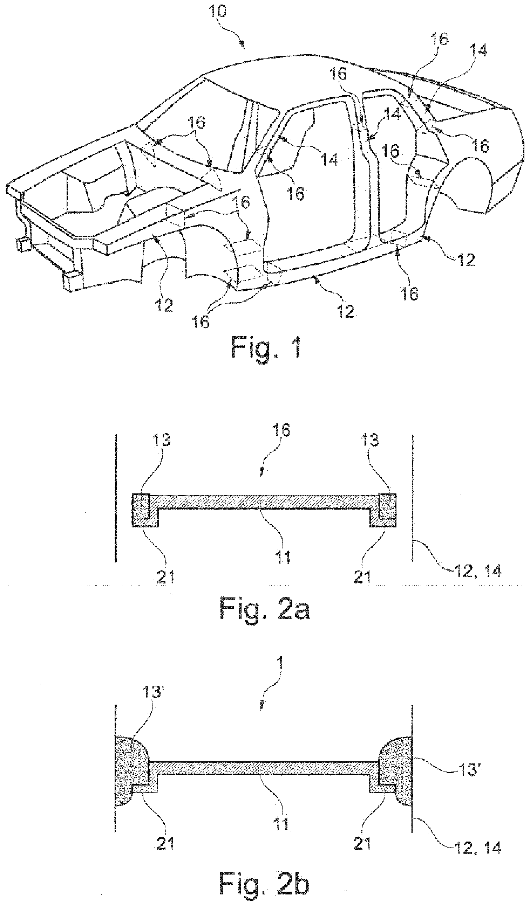

In Fig. 1 ist eine Karosserie eines Automobils schematisch dargestellt. Die Karosserie 10 weist dabei verschiedene Strukturen mit Hohlräumen, wie beispielsweise Säulen 14 und Träger bzw. Verstrebungen 12 auf. Solche Strukturelemente 12, 14 mit Hohlräumen werden üblicherweise mit Abdichtungs- und/oder Verstärkungselementen 16 abgedichtet bzw. verstärkt.

Fig. 2a und 2b zeigen schematisch ein bekanntes Konzept zum abdichtenden und/oder verstärkenden Verschluss von Öffnungen bzw. Hohlräumen in einem Kraftfahrzeug. Dabei zeigt die Fig. 2a eine Vorrichtung 16 vor einer Expansion eines Klebstoffes 13. Fig. 2b zeigt dieselbe Vorrichtung 16 als Bestandteil des Systems 1, jedoch nach einer Expansion des Klebstoffes 13, also mit dem expandierten Klebstoff 13'.

Die Vorrichtung 16 befindet sich in einem Hohlraum einer Karosseriestruktur, wie sie beispielsweise in Fig. 1 dargestellt ist. Ein Abschnitt eines solchen Strukturelements 12, 14 einer Karosserie ist in den Fig. 2a und 2b schematisch dargestellt. Die Vorrichtung 16 umfasst einen Träger 11, welcher einen Randbereich 21 hat. Der Klebstoff 13 ist dabei im Wesentlichen auf diesem Randbereich 21 des Trägers 11 angeordnet.

Vor der Expansion des Klebstoffes 13 besteht zwischen der Vorrichtung 16 und dem Strukturelement 12, 14 ein Spalt. Dieser Spalt erlaubt es, das Strukturelement 12, 14 zu beschichten, um einen Korrosionsschutz des Strukturelementes 12, 14 zu erreichen. Nach dieser Beschichtung wird der Klebstoff13 üblicherweise durch eine Wärmeeinwirkung expandiert, wobei der expandierte Klebstoff 13' dadurch den Spalt zwischen der Vorrichtung 16 und dem Strukturelement 12, 14 schliesst. Zudem wird durch die Expansion des Klebstoffes 13 auch zugleich eine Fixierung der Vorrichtung 16' im Strukturelement 12, 14 erreicht. Eine derart im Strukturelement 12, 14 befestigte Vorrichtung 16' verstärkt einerseits das Strukturelement 12, 14 und verschliesst andererseits den Hohlraum im Strukturelement 12, 14.

Nachteilig an den bisher bekannten Abdichtungs- und/oder Verstärkungselementen ist es, dass diese Elemente relativ komplex, aufwändig und kostenintensiv in der Herstellung sind.

Weiterhin haben die bekannten Abdichtungs- und/oder Verstärkungselemente den Nachteil, dass sie eine lediglich beschränkte Lagerfähigkeit aufweisen. Dies ist insbesondere deshalb so, weil der Klebstoff auf den Elementen nicht beliebig lang und nicht bei extremen Bedingungen gelagert werden kann.

Es ist daher eine Aufgabe der vorliegenden Erfindung, ein verbessertes System zur Dämmung eines Strukturelementes in einem Kraftfahrzeug zur Verfügung zu stellen, welches die Nachteile des Standes der Technik vermeidet. Das System soll insbesondere wirtschaftliche Vorteile mit sich bringen und zudem die damit verbundene Logistik, und insbesondere die Lagerfähigkeit, vereinfachen bzw. verbessern.

Diese Aufgabe wird gelöst durch ein System zur Dämmung eines Strukturelementes in einem Kraftfahrzeug, das System umfassend: ein Strukturelement mit einem ersten Bestandteil und einem zweiten Bestandteil, wobei die Bestandteile an einer ersten Fügestelle und an einer zweiten Fügestelle zusammengefügt sind, und wobei das Strukturelement einen Hohlraum bildet; eine Vorrichtung mit einem Träger, wobei der Träger durch ein Befestigungselement am Strukturelement angeordnet ist; und ein expandierbarer Klebstoff, welcher auf dem Strukturelement durch Pumpen oder durch Extrudieren angeordnet ist; wobei der Träger und der expandierbare Klebstoff derart ausgebildet und angeordnet sind, dass der Träger den expandierbaren Klebstoff bei dessen Expansion in zumindest eine Richtung begrenzt.

Diese Lösung hat zunächst den Vorteil, dass dadurch die Vorrichtung im Vergleich zum Stand der Technik wesentlich einfacher und kostengünstiger hergestellt werden kann. Insbesondere kann gemäss dem hier vorgeschlagenen System eine einstückige und/oder aus nur einem Material aufgebaute und/oder in einem Schritt hergestellte Vorrichtung eingesetzt werden. Somit kann beispielsweise ein Einkomponenten-Spritzgussverfahren anstelle eines Zweikomponenten-Spritzgussverfahrens verwendet werden. Dies senkt sowohl die effektiven Kosten der Herstellung als auch einen Aufwand bei der Planung und Ausgestaltung der Vorrichtung.

Ein Kerngedanke der vorliegenden Erfindung besteht darin, dass der expandierbare Klebstoff nicht auf dem Träger angeordnet ist, bevor die Vorrichtung im Strukturelement befestigt wird, sondern dass die Vorrichtung ohne Klebstoff im Strukturelement befestigt wird und der expandierbare Klebstoff separat in das System eingebracht wird. Dies hat den Vorteil, dass die Vorrichtung ohne den Klebstoff viel besser transportfähig und lagerfähig ist. Dies reduziert damit verbundene Logistikkosten wesentlich. Dabei kann der expandierbare Klebstoff in einer Produktionslinie der Kraftfahrzeuge jeweils frisch in das System appliziert werden, beispielsweise in der Form von Bulkware.

Ein weiterer Vorteil des hier vorgeschlagenen Systems ist darin zu sehen, dass durch die separate Applikation des expandierbaren Klebstoffes schwer zugängliche Stellen des Hohlraumes des Strukturelementes besser verstärkt, abgedichtet, gedämpft oder gedämmt werden können, als dies mit den eingangs erwähnten Systemen möglich ist. Insbesondere kann der expandierbare Klebstoff auch schon vor dessen Aktivierung Fügestellen vollständig ausfüllen.

Weiterhin hat die hier vorgeschlagene Lösung den Vorteil, dass mit einer (standardisierten) Vorrichtung verschiedene Strukturelemente gedämmt werden können, indem jeweils eine unterschiedliche Menge und/oder Anordnung des expandierbaren Klebstoffes eingesetzt wird. So kann beispielsweise ein erstes Strukturelement mit einem grösseren Hohlraum mit der Standardvorrichtung und einer grösseren Menge an expandierbarem Klebstoff gedämmt werden, und ein zweites Strukturelement mit einem kleineren Hohlraum kann mit derselben Standardvorrichtung und einer kleineren Menge an expandierbarem Klebstoff gedämmt werden.

Somit müssen weniger verschiedene Vorrichtungen hergestellt werden, sodass durch höhere Stückzahlen, weniger Werkzeuge, und einfachere Logistik die Gesamtkosten des Systems verringert werden können.

Die Bezeichnung "Dämmung" bzw. "gedämmt" umfasst im Zusammenhang mit dieser Erfindung Elemente bzw. Funktionen bzw. Strukturen bzw. Verfahrensschritte zur Abschottung und/oder Verschliessung und/oder Verstärkung und/oder Dämpfung und/oder Dämmung eines Strukturelementes. Diese verschiedenen Eigenschaften einer solchen Dämmung können dabei einzeln oder aber in Kombination miteinander auftreten.

Das Strukturelement umfasst zumindest einen ersten Bestanteil und einen zweiten Bestandteil, welche an einer ersten Fügestelle und an einer zweiten Fügestelle zusammengefügt sind und so einen Hohlraum bilden. Dabei können der erste und der zweite Bestandteil des Strukturelementes jeweils aus einem Element oder aber aus mehreren Elementen bestehen. Daher kann das Strukturelement auch mehr als zwei Fügestellen aufweisen.

In einer beispielhaften Ausführungsform umfasst das System mehrere Vorrichtungen mit einem Träger und einem Befestigungselement. Beispielsweise umfasst das System zwei Vorrichtung, drei Vorrichtungen, vier Vorrichtungen, fünf Vorrichtungen, mehr als zwei Vorrichtungen, mehr als drei Vorrichtungen, mehr als vier Vorrichtungen, oder mehr als fünf Vorrichtungen.

Dabei können jeweils sowohl die Gestalt sowie auch die Materialien dieser mehreren Vorrichtungen gleich oder unterschiedlich sein.

In einer beispielhaften Ausführungsform ist der Träger am ersten Bestandteil des Strukturelementes angeordnet, und der expandierbare Klebstoff ist auf dem zweiten Bestandteil des Strukturelementes angeordnet.

In einer alternativen Ausführungsform ist der Träger am ersten Bestandteil des Strukturelementes angeordnet, und der expandierbare Klebstoff ist ebenfalls auf dem ersten Bestandteil des Strukturelementes angeordnet.

In einer alternativen Weiterbildung ist der Träger am ersten Bestandteil des Strukturelementes angeordnet, und der expandierbare Klebstoff ist auf dem ersten Bestandteil und auf dem zweiten Bestandteil des Strukturelementes angeordnet.

In einer weiteren alternativen Ausführungsform ist der Träger am ersten Bestandteil des Strukturelementes angeordnet, und der expandierbare Klebstoff ist auf dem Träger angeordnet.

In einer beispielhaften Ausführungsform hat der Träger im Wesentlichen einen L-förmigen oder einen I-förmigen oder einen H-förmigen oder einen C-förmigen oder einen T-förmigen oder einen W-förmigen oder einen V-förmigen oder einen U-förmigen oder einen N-förmigen oder einen Z-förmigen oder einen O-förmigen oder einen rechteckigen oder einen ovalen oder einen runden oder einen trapezförmigen oder einen dreieckigen oder einen vieleckigen Querschnitt.

In einer beispielhaften Ausführungsform hat der Träger eine Basis und einen Flügel.

In einer beispielhaften Weiterbildung ist das Befestigungselement an der Basis angeordnet und der Flügel begrenzt die Expansion des expandierbaren Klebstoffes in zumindest eine Richtung.

In einer beispielhaften Weiterbildung bildet der Flügel mit der Basis einen Winkel zwischen 60° und 160° oder zwischen 70° und 150° oder zwischen 80° und 140°.

In einer beispielhaften Ausführungsform ist die Vorrichtung oder nur der Träger durch ein Spritzgussverfahren hergestellt.

In einer beispielhaften Weiterbildung ist die Vorrichtung oder nur der Träger durch ein Einkomponenten-Spritzgussverfahren hergestellt.

In einer alternativen Ausführungsform ist die Vorrichtung oder nur der Träger durch eine Extrusionsverfahren hergestellt.

In einer beispielhaften Ausführungsform sind der Träger und das Befestigungselement einstückig ausgebildet.

In einer weiteren beispielhaften Ausführungsform sind der Träger und das Befestigungselement aus demselben Material ausgebildet.

In einer beispielhaften Ausführungsform umfasst der Träger einen Kunststoff, insbesondere Polyamid.

In einer beispielhaften Ausführungsform umfasst der Träger einen faserverstärkten Kunststoff, insbesondere einen glasfaserverstärkten oder karbonfaserverstärkten Kunststoff.

Der Träger kann grundsätzlich aus verschiedenen Materialien bestehen. Bevorzugte Materialien sind Kunststoffe, insbesondere Polyurethane, Polyamide, Polyester und Polyolefine, bevorzugt hochtemperaturbeständige Polymere wie Poly(phenylenether), Polysulfone oder Polyethersulfone, welche insbesondere auch geschäumt sind; Metalle, insbesondere Aluminium und Stahl; oder gewachsene organische Materialien, insbesondere Holz- oder andere (gepresste) Faserwerkstoffe oder glasartige oder keramische Materialien; speziell auch geschäumte Materialien dieser Art; oder beliebige Kombinationen dieser Materialien. Besonders bevorzugt wird Polyamid, insbesondere Polyamid 6, Polyamid 6,6, Polyamid 11, Polyamid 12 oder ein Gemisch davon verwendet. Auch Kombinationen mit Fasern, wie beispielsweise Glasfasern oder Karbonfasern, sind möglich.

Weiterhin kann der Träger einen beliebigen Aufbau und eine beliebige Struktur aufweisen. Er kann beispielsweise massiv, hohl, oder geschäumt sein oder eine gitterartige Struktur aufweisen. Die Oberfläche des Trägers kann typischerweise glatt, rau oder strukturiert sein.

In einer beispielhaften Ausführungsform hat die Vorrichtung einen im Wesentlichen kreisförmigen oder ovalen oder länglichen oder unregelmässig geformten Grundriss.

In einer beispielhaften Ausführungsform hat der expandierbare Klebstoff eine Expansionsrate von zumindest 200% oder von zumindest 300% oder von zumindest 400% oder von zumindest 500% oder von zumindest 800%.

Ein solcher expandierbarer und pumpbarer Klebstoff ist beispielhaft in der Europäischen Patentanmeldung EP 3 281 970 A1 beschrieben.

Ein Beispiel für einen solchen expandierbaren pumpbaren Klebstoff ist ein unter dem Handelsnamen Sikaseal^{®} erhältlicher Klebstoff.

Ein Beispiel für einen expandierbaren Klebstoff, welcher extrudierbar ist, ist unter dem Namen SikaBaffle^{®} 455 erhältlich.

In einer beispielhaften Ausführungsform ist der expandierbare Klebstoff in Form einer Raupe oder mehrerer Raupen auf dem zweiten Bestandteil des Strukturelementes angeordnet.

In einer beispielhaften Ausführungsform ist der expandierbare Klebstoff durch einen Roboter auf dem zweiten Bestandteil des Strukturelementes angeordnet.

In einer beispielhaften Ausführungsform hat die zumindest eine Raupe einen Durchmesser von 2 bis 20 mm oder von 4 bis 18 mm oder von 6 bis 16 mm.

In einer beispielhaften Ausführungsform hat die zumindest eine Raupe eine Länge von zumindest 10 mm oder von zumindest 20 mm oder von zumindest 30 mm oder von zumindest 50 mm oder von zumindest 100 mm.

In einer beispielhaften Ausführungsform ist der expandierbare Klebstoff an der ersten Fügestelle und an der zweiten Fügestelle mit dem Strukturelement in Kontakt.

In einer beispielhaften Ausführungsform berührt der expandierbare Klebstoff im Bereich der ersten und der zweiten Fügestelle jeweils sowohl den ersten Bestandteil des Strukturelementes als auch den zweiten Bestandteil des Strukturelementes.

In einer beispielhaften Ausführungsform hat der expandierbare Klebstoff jeweils ausgehend von den Fügestellen eine Ausdehnung entlang des zweiten Bestandteils des Strukturelementes von zumindest 10 mm oder von zumindest 15 mm oder von zumindest 20 mm oder von zumindest 30 mm oder von zumindest 40 mm.

In einer beispielhaften Ausführungsform bildet der expandierbare Klebstoff ein durchgehendes Element zwischen der ersten Fügestelle und der zweiten Fügestelle.

In einer beispielhaften Ausführungsform bildet der expandierbare Klebstoff ein einziges zusammenhängendes Element. In einer alternativen Ausführungsform bilden mehrere nicht zusammenhängende expandierbare Klebstoffe mehrere nicht zusammenhängende Elemente.

In einer beispielhaften Ausführungsform ist der expandierbare Klebstoff ein pumpbares oder extrudierbares Material.

In einer beispielhaften Ausführungsform ist der expandierbare Klebstoff pumpbar bei einer Temperatur von weniger als 80° C, bevorzugt von weniger als 70° C, bevorzugt von wengier als 60° C, besonders bevorzugt von weniger als 50° C.

In einer beispielhaften Ausführungsform ist der expandierbare Klebstoff extrudierbar bei einer Temperatur von weniger als 100° C, bevorzugt von weniger als 90°C, bevorzugt von wengier als 80°C, besonders bevorzugt von weniger als 70°C.

In einer beispielhaften Ausführungsform ist der expandierbare Klebstoff pumpbar oder extrudierbar bei einer Temperatur, welche um zumindest 20 K oder um zumindest 30 K oder um zumindest 40 K oder um zumindest 50 K oder um zumindest 60 K unter einer Aktivierungstemperatur des zweiten expandierbare Klebstoffes liegt.

In einer beispielhaften Ausführungsform ist das Befestigungselement als Clip ausgebildet.

In einer alternativen Ausführungsform ist das Befestigungselement als Schweisslasche oder als magnetisches Element oder als Klebstoff oder als Haken ausgebildet.

In einer beispielhaften Ausführungsform hat das Strukturelement eine Öffnung, wobei der Träger derart angeordnet ist, dass die Öffnung nach einer Expansion des expandierbaren Klebstoffes frei ist von expandiertem Klebstoff.

Eine solche Anordnung des Trägers hat den Vorteil, dass dadurch Öffnungen im Strukturelement, wie sie beispielsweise für Kabeldurchführungen oder Ähnliches verwendet werden, freigehalten werden können von expandiertem Klebstoff, so dass solche Öffnungen in ihrer Funktion nicht beeinträchtigt sind.

In einer beispielhaften Ausführungsform beträgt eine Distanz zwischen dem Träger und dem Strukturelement zwischen 2 und 6 mm oder zwischen 3 und 5 mm.

Die eingangs gestellte Aufgabe wird zudem gelöst durch ein Verfahren zur Dämmung eines Strukturelementes in einem Kraftfahrzeug, das Verfahren umfassend die Schritte: Bereitstellen einer Vorrichtung mit einem Träger; Anordnen der Vorrichtung am Strukturelement; Anordnen eines expandierbaren Klebstoffes durch Pumpen oder durch Extrudieren auf dem Strukturelement Fügen eines ersten Bestandteils und eines zweiten Bestandteils des Strukturelementes zur Bildung des Strukturelementes, wobei die Vorrichtung und der expandierbare Klebstoff in einem Hohlraum zwischen den Bestandteilen des Strukturelementes angeordnet sind; und Expandieren des expandierbaren Klebstoffes, wobei der Träger die Expansion des expandierbaren Klebstoffes in zumindest eine Richtung begrenzt.

In einer beispielhaften Ausführungsform wird der expandierbare Klebstoff mit einer Temperatur von weniger als 80°C oder von weniger als 70°C oder von weniger als 60°C oder von weniger als 50°C durch Pumpen angeordnet.

In einer beispielhaften Ausführungsform wird der expandierbare Klebstoff mit einer Temperatur von weniger als 100°C oder von weniger als 90°C oder von weniger als 80°C oder von weniger als 70°C durch Extrudieren angeordnet.

In einer beispielhaften Ausführungsform wird der expandierbare Klebstoff mit einer Temperatur von mehr als 100°C oder von mehr als 110°C oder von mehr als 120°C oder von mehr als 140°C expandiert.

In einer beispielhaften Ausführungsform wird das Verfahren mit einem System gemäss obiger Beschreibung durchgeführt.

In einer beispielhaften Ausführungsform wird der expandierbare Klebstoff durch einen Roboter auf dem Strukturelement oder dem Träger angeordnet.

In einer beispielhaften Ausführungsform wird der expandierbare Klebstoff auf den zweiten Bestandteil des Strukturelementes gepumpt oder extrudiert.

In einer beispielhaften Ausführungsform wird die Anordnung des Klebstoffes auf dem Strukturelement oder dem Träger vor oder nach dem Anordnen der Vorrichtung an dem ersten Bestandteil des Strukturelementes durchgeführt.

In einer beispielhaften Ausführungsform wird beim Aktivieren des expandierbaren Klebstoffes Wärme eingesetzt, insbesondere wird die Aktivierung des Klebstoffes in einem Lackierofen oder in einem Korrosionsschutz-Ofen durchgeführt.

Einzelheiten und Vorteile der Erfindung werden im Folgenden anhand von Ausführungsbeispielen und mit Bezug auf schematische Zeichnungen beschrieben.

Es zeigen:
- Fig. 1: eine beispielhafte Darstellung einer Karosserie gemäss Stand der Technik;
- Fig. 2a und 2b: schematische Darstellung einer beispielhaften Vorrichtung gemäss Stand der Technik;
- Fig. 3: schematische Darstellung einer beispielhaften Vorrichtung in einem Strukturelement;
- Fig. 4a und 4b: schematische Darstellungen beispielhafter Vorrichtungen; und
- Fig. 5a bis 6b: schematische Darstellungen beispielhafter Systeme zur Dämmung von Strukturelementen.

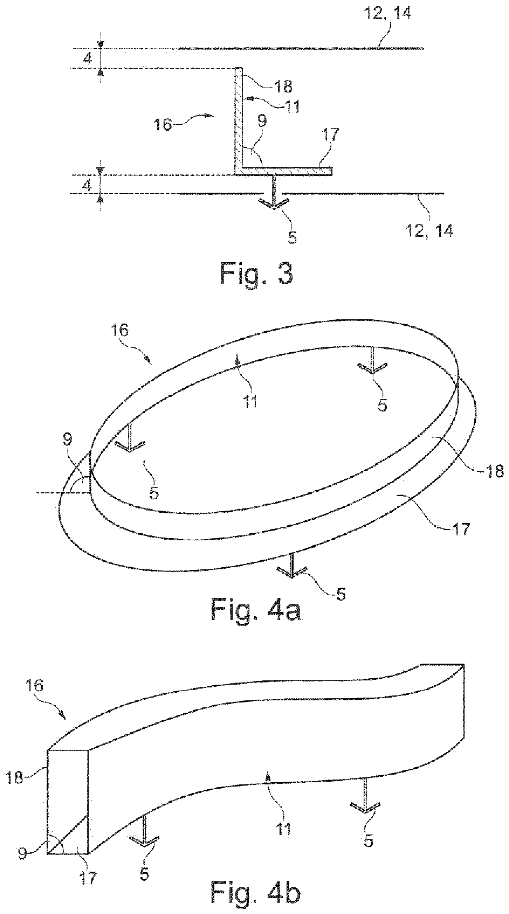

In Fig. 3 ist schematisch und beispielhaft eine Vorrichtung 16 in einem Strukturelement 12, 14 in einer Querschnittsdarstellung gezeigt. In diesem Ausführungsbeispiel hat die Vorrichtung 16 einen Träger 11 mit einem L-förmigen Querschnitt. Dabei bildet ein erster Schenkel eine Basis 17 des Trägers, und ein zweiter Schenkel bildet einen Flügel 18. Die Basis 17 und der Flügel 18 bilden einen Winkel 9, welcher in diesem Ausführungsbeispiel ungefähr 90° beträgt. An der Basis 17 ist ein Befestigungselement 5 angeordnet. Die Vorrichtung 16 ist durch dieses Befestigungselement 5 am Strukturelement 12, 14 angeordnet. In diesem Ausführungsbeispiel ist das Befestigungselement 5 als Clip ausgebildet.

Eine Distanz 4 zwischen dem Träger 11 und dem Strukturelement 12, 14 beträgt in diesem Ausführungsbeispiel ungefähr 4 mm. Eine solche Distanz 4 ermöglicht es einerseits, das Strukturelement 12, 14 vor einer Expansion des expandierbaren Klebstoffes mit einer Lackierflüssigkeit zu beschichten, und erlaubt es dem Träger 11 andererseits, eine Expansion des expandierbaren Klebstoffes gegen zumindest eine Richtung hin effektiv zu begrenzen.

In den Fig. 4a und 4b sind schematisch und beispielhaft zwei unterschiedliche Vorrichtungen 16 in räumlicher Darstellung abgebildet. Die Vorrichtung 16 in der Fig. 4a hat einen im Wesentlichen kreisförmigen Grundriss. Zudem hat der Träger 11 in diesem Ausführungsbeispiel wiederum einen im Wesentlichen L-förmigen Querschnitt. Dabei hat der Träger 11 eine Basis 17 und einen Flügel 18, welche einen Winkel 9 bilden. In diesem Ausführungsbeispiel sind an der Basis 17 drei Befestigungselemente 5 zur Anordnung der Vorrichtung 16 an einem Strukturelement angeordnet.

Die Vorrichtung 16 in Fig. 4b hat einen rechteckigen Querschnitt. Dabei ist die Vorrichtung 16 länglich ausgebildet bzw. sie hat einen länglichen Grundriss. Wiederum hat der Träger 11 der Vorrichtung 16 eine Basis 17 und einen Flügel 18, welche einen Winkel 9 bilden. In diesem Ausführungsbeispiel sind die Basis 17 und der Flügel 18 durch weitere Wände des Trägers 11 ergänzt. An der Basis 17 des Trägers 11 sind in diesem Ausführungsbeispiel zwei Befestigungselemente 5 zur Anordnung der Vorrichtung 16 in einem Strukturelement angeordnet.

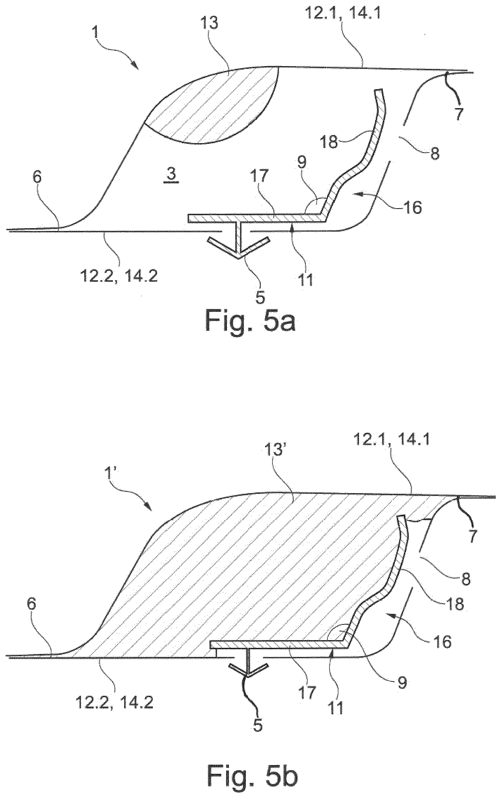

In den Fig. 5a bis 6b sind schematisch und beispielhaft Systeme 1 zur Dämmung eines Strukturelementes 12, 14 dargestellt.

In den Fig. 5a und 5b ist ein System 1 dargestellt, wobei der expandierbare Klebstoff 13 auf dem Strukturelement 12, 14 angeordnet ist. In diesem Ausführungsbeispiel ist der expandierbare Klebstoff 13 auf einem ersten Bestandteil 12.1, 14.1 des Strukturelementes angeordnet, und die Vorrichtung 16 ist auf einem zweiten Bestandteil 12.2, 14.2 des Strukturelementes angeordnet. Die beiden Bestandteile 12.1, 14.1, 12.2, 14.2 des Strukturelementes sind an einer ersten Fügestelle 6 und an einer zweiten Fügestelle 7 zusammengefügt. Dabei bildet das Strukturelement 12, 14 einen Hohlraum 3, in welchem sowohl der expandierbare Klebstoff 13 als auch die Vorrichtung 16 angeordnet sind.

Die Vorrichtung 16 umfasst einen Träger 11 und ein Befestigungselement 5. Der Träger 11 hat eine Basis 17 und einen Flügel 18, welche einen Winkel 9 bilden. Der Flügel 18 ist dabei vor einer Öffnung 8 im Strukturelement 12, 14 angeordnet. Dadurch begrenzt der Träger 11 und insbesondere dessen Flügel 18 die Expansion des expandierbaren Klebstoffes 13 in Richtung dieser Öffnung 8, so dass der expandierte Klebstoff 13' nicht in den Bereich der Öffnung 8 gelangen kann. Dies ist in Fig. 5b ersichtlich, in welcher das System 1' nach einer Expansion des expandierbaren Klebstoffes 13 dargestellt ist.

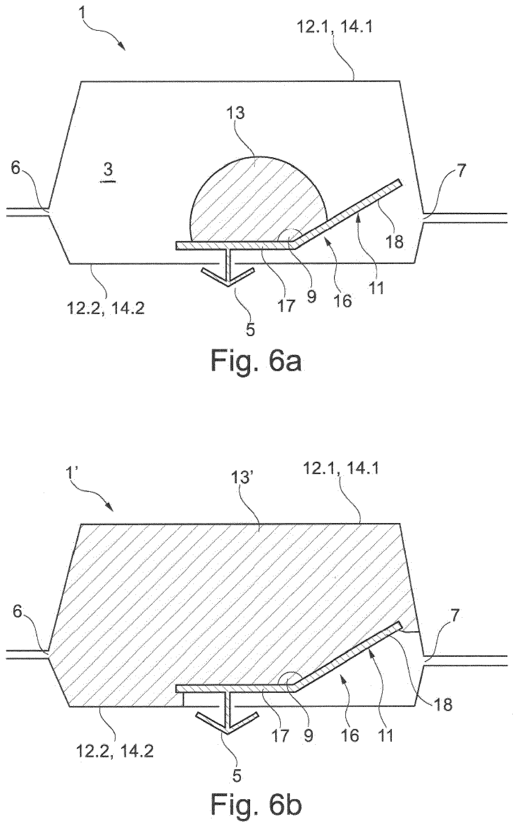

In den Fig. 6a und 6b ist ein weiteres beispielhaftes System 1 zur Dämmung eines Strukturelementes 12, 14 dargestellt. Im Unterschied zum System 1 in den Fig. 5a und 5b ist in diesem Ausführungsbeispiel der expandierbare Klebstoff 13 nicht auf dem Strukturelement 12, 14 angeordnet, sondern auf dem Träger 11. Dabei ist der expandierbare Klebstoff 13 in der Form einer Raupe und durch Pumpen oder Extrudieren auf dem Träger 11 angeordnet.

Wiederum begrenzt der Träger 11 eine Expansion des expandierbaren Klebstoffes 13 in zumindest eine Richtung, so dass ein vorbestimmter Bereich des Strukturelementes 12, 14 bzw. dessen Hohlraum 3 nach einer Expansion des expandierbaren Klebstoffes 13 frei bleibt von expandiertem Klebstoff 13'. Dies ist in der Fig. 6b dargestellt.

### Bezugszeichenliste

- 1: System
- 3: Hohlraum
- 4: Distanz
- 5: Befestigungselement
- 6: erste Fügestelle
- 7: zweite Fügestelle
- 8: Öffnung
- 9: Winkel
- 10: Karosserie
- 11: Träger
- 12: Strukturelement
- 12.1: erster Bestandteil
- 12.2: zweiter Bestandteil
- 13: expandierbarer Klebstoff
- 14: Strukturelement
- 14.1: erster Bestandteil
- 14.2: zweiter Bestandteil
- 16: Vorrichtung
- 17: Basis
- 18: Flügel
- 21: Randbereich

## Patentansprüche

1. System (1) zur Dämmung eines Strukturelementes (12, 14) in einem Kraftfahrzeug, das System (1) umfassend:
ein Strukturelement (12, 14) mit einem ersten Bestandteil (12.1, 14.1) und einem zweiten Bestandteil (12.2, 14.2), wobei die Bestandteile (12.1, 12.2, 14.1, 14.2) an einer ersten Fügestelle (6) und an einer zweiten Fügestelle (7) zusammengefügt sind, und wobei das Strukturelement (12, 14) einen Hohlraum (3) bildet;
eine Vorrichtung (16) mit einem Träger (11), wobei der Träger (11) durch ein Befestigungselement (5) am Strukturelement (12, 14) angeordnet ist; und
ein expandierbarer Klebstoff (13), welcher auf dem Strukturelement (12, 14) durch Pumpen oder durch Extrudieren angeordnet ist;
wobei der Träger (11) und der expandierbare Klebstoff (13) derart ausgebildet und angeordnet sind, dass der Träger (11) den expandierbaren Klebstoff (13) bei dessen Expansion in zumindest eine Richtung begrenzt.

2. System nach Anspruch 1, wobei der Träger (11) am ersten Bestandteil (12.1, 14.1) des Strukturelementes (12, 14) angeordnet ist, und wobei der expandierbare Klebstoff (13) auf dem zweiten Bestandteil (12.2, 14.2) des Strukturelementes (12, 14) angeordnet ist.

3. System nach einem der Ansprüche 1 oder 2, wobei der Träger (11) eine Basis (17) und einen Flügel (18) hat, und wobei das Befestigungselement an der Basis (17) angeordnet ist und der Flügel (18) die Expansion des expandierbaren Klebstoffes (13) in zumindest eine Richtung begrenzt.

4. System (1) nach Anspruch 3, wobei der Flügel (18) und die Basis (17) einen Winkel zwischen 60° und 160° bilden.

5. System nach einem der vorhergehenden Ansprüche, wobei die Vorrichtung (16) durch ein Spritzgussverfahren hergestellt ist und/oder wobei die Vorrichtung (16) aus nur einem Material besteht und/oder wobei die Vorrichtung (16) einstückig ausgebildet ist.

6. System nach einem der vorhergehenden Ansprüche, wobei die Vorrichtung (16) einen im Wesentlichen kreisförmigen oder ovalen oder länglichen oder unregelmässig geformten Grundriss hat.

7. System nach einem der vorhergehenden Ansprüche, wobei der expandierbare Klebstoff (13) eine Expansionsrate von zumindest 200% hat.

8. System nach einem der vorhergehenden Ansprüche, wobei der expandierbare Klebstoff (13) in Form einer Raupe oder mehrerer Raupen auf dem Strukturelement (12, 14) angeordnet ist.

9. System nach einem der vorhergehenden Ansprüche, wobei der expandierbare Klebstoff (13) als ein zusammenhängendes Element oder als mehrere nicht zusammenhängende Elemente ausgebildet ist.

10. System nach einem der vorhergehenden Ansprüche, wobei das Befestigungselement (5) als Clip ausgebildet ist.

11. System nach einem der vorhergehenden Ansprüche, wobei das Strukturelement (12, 14) eine Öffnung (8) hat, und wobei der Träger (11) derart angeordnet ist, dass die Öffnung (8) nach einer Expansion des expandierbaren Klebstoffes (13) frei ist von expandiertem Klebstoff (13').

12. System (1) nach einem der vorhergehenden Ansprüche, wobei eine Distanz (4) zwischen dem Träger (11) und dem Strukturelement (12, 14) zwischen 2 und 6 mm beträgt.

13. Verfahren zur Dämmung eines Strukturelementes (12, 14) in einem Kraftfahrzeug, das Verfahren umfassend die Schritte:
Bereitstellen einer Vorrichtung (16) mit einem Träger (11);
Anordnen der Vorrichtung (16) am Strukturelement (12, 14);
Anordnen eines expandierbaren Klebstoffes (13) durch Pumpen oder durch Extrudieren auf dem Strukturelement (12, 14);
Fügen eines ersten Bestandteils (12.1, 14.1) und eines zweiten Bestandteils (12.2, 14.2) des Strukturelementes (12, 14) zur Bildung des Strukturelementes (12, 14),
wobei die Vorrichtung (16) und der expandierbare Klebstoff (13) in einem Hohlraum (3) zwischen den Bestandteilen (12.1, 12.2) des Strukturelementes (12, 14) angeordnet sind; und
Expandieren des expandierbaren Klebstoffes (13), wobei der Träger (11) die Expansion des expandierbaren Klebstoffes (13) in zumindest eine Richtung begrenzt.

14. Verfahren nach Anspruch 13, wobei der expandierbare Klebstoff (13) mit einer Temperatur von weniger als 80°C durch Pumpen oder durch Extrudieren angeordnet wird und/oder wobei der expandierbare Klebstoff (13) mit einer Temperatur von mehr als 100°C expandiert wird.

15. Verfahren nach Anspruch 13 oder 14, wobei das Verfahren mit einem System (1) nach einem der Ansprüche 1 bis 13 durchgeführt wird.

## Claims

1. A system (1) for insulating a structural element (12, 14) in a motor vehicle, the system (1) comprising:
a structural element (12, 14) having a first constituent part (12.1, 14.1) and a second constituent part (12.2, 14.2), wherein the constituent parts (12.1, 12.2, 14.1, 14.2) are joined together at a first joining point (6) and at a second joining point (7), and wherein the structural element (12, 14) forms a cavity (3);
a device (16) having a carrier (11), wherein the carrier (11) is arranged on the structural element (12, 14) by virtue of a fastening element (5); and
an expandable adhesive (13), which is arranged on the structural element (12, 14) by pumping or by extruding;
wherein the carrier (11) and the expandable adhesive (13) are formed and arranged in such a way that the carrier (11) delimits the expandable adhesive (13) in at least one direction as said adhesive expands.

2. The system as claimed in claim 1, wherein the carrier (11) is arranged on the first constituent part (12.1, 14.1) of the structural element (12, 14), and wherein the expandable adhesive (13) is arranged on the second constituent part (12.2, 14.2) of the structural element (12, 14).

3. The system as claimed in either of claims 1 and 2, wherein the carrier (11) has a base (17) and a wing (18), and wherein the fastening element is arranged on the base (17) and the wing (18) delimits the expansion of the expandable adhesive (13) in at least one direction.

4. The system (1) as claimed in claim 3, wherein the wing (18) and the base (17) form an angle of between 60° and 160°.

5. The system as claimed in one of the preceding claims, wherein the device (16) has been produced by an injection-molding process and/or wherein the device (16) consists of only one material and/or wherein the device (16) is formed in one piece.

6. The system as claimed in one of the preceding claims, wherein the device (16) has a substantially circular or oval or elongate or irregularly shaped outline.

7. The system as claimed in one of the preceding claims, wherein the expandable adhesive (13) has an expansion rate of at least 200%.

8. The system as claimed in one of the preceding claims, wherein the expandable adhesive (13) is arranged on the structural element (12, 14) in the form of a bead or a plurality of beads.

9. The system as claimed in one of the preceding claims, wherein the expandable adhesive (13) is in the form of a cohesive element or in the form of a plurality of non-cohesive elements.

10. The system as claimed in one of the preceding claims, wherein the fastening element (5) is in the form of a clip.

11. The system as claimed in one of the preceding claims, wherein the structural element (12, 14) has an opening (8), and wherein the carrier (11) is arranged in such a way that the opening (8) is free of expanded adhesive (13') after the expandable adhesive (13) has been expended.

12. The system (1) as claimed in one of the preceding claims, wherein a distance (4) between the carrier (11) and the structural element (12, 14) amounts to between 2 and 6 mm.

13. A method for insulating a structural element (12, 14) in a motor vehicle, the method comprising the steps of:
providing a device (16) having a carrier (11);
arranging the device (16) on the structural element (12, 14);
arranging an expandable adhesive (13) on the structural element (12, 14) by pumping or by extruding;
joining a first constituent part (12.1, 14.1) and a second constituent part (12.2, 14.2) of the structural element (12, 14) to form the structural element (12, 14), wherein the device (16) and the expandable adhesive (13) are arranged in a cavity (3) between the constituent parts (12.1, 12.2) of the structural element (12, 14); and
expanding the expandable adhesive (13), wherein the carrier (11) delimits the expansion of the expandable adhesive (13) in at least one direction.

14. The method as claimed in claim 13, wherein the expandable adhesive (13) is arranged by pumping or by extruding at a temperature of less than 80°C and/or wherein the expandable adhesive (13) is expanded at a temperature of more than 100°C.

15. The method as claimed in claim 13 or 14, wherein the method is carried out by a system (1) as claimed in one of claims 1 to 13.

## Revendications

1. Système (1) pour isoler un élément structurel (12, 14) dans un véhicule automobile, le système (1) comprenant :
un élément structurel (12, 14) avec un premier constituant (12.1, 14.1) et un deuxième constituant (12.2, 14.2), les constituants (12.1, 12.2, 14.1, 14.2) étant assemblés à un premier emplacement d'assemblage (6) et à un deuxième emplacement d'assemblage (7), et l'élément structurel (12, 14) formant une cavité (3) ;
un dispositif (16) avec un support (11), le support (11) étant agencé sur l'élément structurel (12, 14) par un élément de fixation (5) ; et
un adhésif expansible (13), qui est agencé sur l'élément structurel (12, 14) par pompage ou par extrusion ;
dans lequel le support (11) et l'adhésif expansible (13) sont configurés et agencés de telle sorte que le support (11) limite l'adhésif expansible (13) lors de son expansion dans au moins une direction.

2. Système selon la revendication 1, dans lequel le support (11) est agencé sur le premier constituant (12.1, 14.1) de l'élément structurel (12, 14), et dans lequel l'adhésif expansible (13) est agencé sur le deuxième constituant (12.2, 14.2) de l'élément structurel (12, 14).

3. Système selon l'une quelconque des revendications 1 ou 2, dans lequel le support (11) a une base (17) et une ailette (18), et dans lequel l'élément de fixation est agencé sur la base (17) et l'ailette (18) limite l'expansion de l'adhésif expansible (13) dans au moins une direction.

4. Système (1) selon la revendication 3, dans lequel l'ailette (18) et la base (17) forment un angle compris entre 60° et 160°.

5. Système selon l'une quelconque des revendications précédentes, dans lequel le dispositif (16) est fabriqué par un procédé de moulage par injection et/ou dans lequel le dispositif (16) est constitué d'un seul matériau et/ou dans lequel le dispositif (16) est configuré d'un seul tenant.

6. Système selon l'une quelconque des revendications précédentes, dans lequel le dispositif (16) a une projection horizontale de forme essentiellement circulaire ou ovale ou allongée ou irrégulière.

7. Système selon l'une quelconque des revendications précédentes, dans lequel l'adhésif expansible (13) a un taux d'expansion d'au moins 200 %.

8. Système selon l'une quelconque des revendications précédentes, dans lequel l'adhésif expansible (13) est agencé sur l'élément structurel (12, 14) sous la forme d'un boudin ou de plusieurs boudins.

9. Système selon l'une quelconque des revendications précédentes, dans lequel l'adhésif expansible (13) est configuré sous la forme d'un élément cohérent ou sous la forme de plusieurs éléments non cohérents.

10. Système selon l'une quelconque des revendications précédentes, dans lequel l'élément de fixation (5) est configuré sous forme de clip.

11. Système selon l'une quelconque des revendications précédentes, dans lequel l'élément structurel (12, 14) a une ouverture (8), et dans lequel le support (11) est agencé de telle sorte que l'ouverture (8) est exempte d'adhésif expansé (13') après une expansion de l'adhésif expansible (13).

12. Système (1) selon l'une quelconque des revendications précédentes, dans lequel une distance (4) entre le support (11) et l'élément structurel (12, 14) est comprise entre 2 et 6 mm.

13. Procédé d'isolation d'un élément structurel (12, 14) dans un véhicule automobile, le procédé comprenant les étapes suivantes :
la fourniture d'un dispositif (16) avec un support (11) ;
l'agencement du dispositif (16) sur l'élément structurel (12, 14) ;
l'agencement d'un adhésif expansible (13) par pompage ou par extrusion sur l'élément structurel (12, 14) ;
l'assemblage d'un premier constituant (12.1, 14.1) et d'un deuxième constituant (12.2, 14.2) de l'élément structurel (12, 14) pour former l'élément structurel (12, 14),
le dispositif (16) et l'adhésif expansible (13) étant agencés dans une cavité (3) entre les constituants (12.1, 12.2) de l'élément structurel (12, 14) ; et
l'expansion de l'adhésif expansible (13), le support (11) limitant l'expansion de l'adhésif expansible (13) dans au moins une direction.

14. Procédé selon la revendication 13, dans lequel l'adhésif expansible (13) est agencé à une température inférieure à 80 °C par pompage ou par extrusion et/ou dans lequel l'adhésif expansible (13) est expansé à une température supérieure à 100 °C.

15. Procédé selon la revendication 13 ou 14, dans lequel le procédé est réalisé avec un système (1) selon l'une quelconque des revendications 1 à 13.
